# EUROPEAN PATENT APPLICATION

(11) **EP 4 235 049 A1**
(43) Date of publication of application: **30.08.2023**
(21) Application number: 23157657.0
(22) Date of filing: 20.02.2023
(51) Int. Cl.: F24F 13/02, F16L 23/14, F16L 9/00

(54) **INSULATED VENTILATION DUCT HAVING A RECTANGULAR CROSS-SECTION**

(30) Priority: 23.02.2022 PL 44044122
(71) Applicant: Kazimierski, Wojciech, 02-496 Warszawa (PL)
(72) Inventor: Kazimierski, Wojciech, 02-496 Warszawa (PL)
(74) Representative: Pawlowska, Justyna

(57) **Abstract**

Subject matter of invention is construction of a pre-insulting ventilation built on basic structure of layer of polyurethane foam located parallel to each other in the form of jackets - casings which constitute an outer channel and an inner channel i.e. an outer casing known as jacket of the duct having a rectangular cross-section - the outer channel, and an inner casing known also as jacket, running concentrically in the outer jacket - constituting the inner channel. A space filled with polyurethane foam, having a rectangular cross-section is created between the outer jacket and the inner jacket, thus forming an insulating partition - insulating separation, barrier in the meaning as compartment, section or area that divides the layers of the duct. The space created by the inner jacket remains empty, thus forming the inner channel, which constitutes the lumen of the ventilation duct. Thus, the interior formed inside and within the boundaries of the inner jacket is not filled with any insulating material.

## Description

The inventions refers to a structure of a pre-insulated ventilation channel - a ventilation duct, filled with an insulating layer having properly selected properties and parameters.

Ventilation ducts that comprise a fibre material are known.

A segmental flexible ventilation duct is known from specification YPL61111, which is used to supply clean air to workplaces in confined spaces in, for example, ship cargo holds, in ship engine rooms¦. The essence of the solution is a structure of a segmental flexible ventilation duct, preferably made of PVC-coated synthetic fabric with non-flammable and anti-electrostatic additives, wherein the duct has a cylindrical form with stiffening-fixing rings sewn overlapping on the outer surface, with catching lugs formed on the upper part and stiffening rings which are arranged alternately with respect to each other along the entire length of the duct. Stiffening-fixing rings and stiffening rings are in the form of a wire with welded ends. The segmental structure of the duct is aimed at achieving appropriate flexibility. The use of fabric guarantees low weight of the entire installation. Stiffness is achieved through special wear surfaces. However, the disadvantages of the solution are: lower tightness and strength; higher air drag; the need for more duct fixings and stiffeners; and the inability to be used outside the building.

From specification EP 2 307 814, a ventilation duct is known which comprises a fibrous material and at least one fluid-impermeable surface material, and has an upright position and a polygonal cross-section. The ventilation duct can be wound in its storage position and self-supporting in its upright position due to the alternating soft and stiff transverse portions and to the fact that the alternating soft and stiff transverse portions of the walls and longitudinal bend lines are embossed in the material of the channel walls. Due to the relatively small cross-section, the ventilation duct can be fixed by measures spaced quite far apart from each other. The solution is unable to meet the requirements for large cross-sections and the requirements for high pressure resistance.

From specification EP 2758722, a duct is also known which has a hexagonal cross-section, comprises a number of wall sections made at least partially of a fibre material and a binder that together define a closed longitudinal flow space, and the interconnecting wall sections are connected via an intermediate element in the form of at least one longitudinal bend line or weld. Longitudinal stiffeners are arranged in the fibre material and the binder of the duct, and there are longitudinal, teardropshaped bulges on the outside of the duct that contain the fibre material and the binder. The disadvantage of the solution, however, is the complexity of the construction, limitation to ventilation ducts with a large cross-section, inability to meet the requirements for high pressure resistance.

From specification P.403612, a method for manufacturing a ventilation duct having a rectangular cross-section and a rectangular ventilation duct for use in single-family buildings, especially in small installations for transporting air in ventilation, airconditioning and hot air distribution systems, are known. The method for manufacturing a ventilation duct consists in cutting an insulating layer into predetermined form pieces, then grooves are grooved longitudinally in the form pieces thus formed. An adhesive layer is then introduced into these grooves, after which the adhesive thinner is evaporated and a channel core is inserted into the thus prepared form piece of the insulating layer. The channel core with the applied insulating layer is pressed in order to secure the edges and is covered with a protective coating, and the whole is then pressed. The ventilation duct is therefore constructed from a channel core having a square cross-section or an oval cross-section made of non-combustible material, wherein the outer surface of the channel core is covered with an insulating layer of foamed polyurethane. In turn, the outer surface of the insulating layer is covered with a protective coating. The thickness of the core is up to 0.4 to 0.6 mm and the thickness of the insulating layer is between 5 and 15 mm. The invention does not allow high pressure to be withstood, besides prefabrication is not possible; the ducts cannot be maintained and cleaned inside; there is a low thermal insulating power due to the structure achieved and the thickness of the insulating layer.

The aim of the invention was to develop such ventilation ducts having a dedicated rectangular cross-section - rectangular shape in a cross-section in order to ensure: the expected tightness, strength, high insulating power, which was achieved through the use of an appropriate partition structure - an insulating barrier between the layers of the duct - jackets, known as casings of duct which additionally ensures lack of air permeability and stiffness of the duct; resistance to atmospheric conditions - anti-corrosiveness - possibility to be used outdoors. The aim was to achieve a rectangular duct structure that simplifies assembly - a rectangular shape in cross-section. It was also important to achieve a high resistance to high pressure, which was achieved through the use of a given casing - jacket structure, selection of dimensions, materials that build the jackets, structure of the insulating partition, additionally the use of steel sheet, especially galvanised steel, and a layer of foam forming an insulating layer that insulates moisture. Reduced air drag and ease of maintenance and cleaning of the ducts inside has been achieved by eliminating internal duct stiffeners - and this has been achieved through the structure of the jackets, their joints between the ducts, and the insulating layer. The aim was to obtain the possibility of prefabrication.

The subject matter of the invention is a structure of a pre-insulated ventilation duct having a longitudinal rectangular cross-section, made, in its basic form, of two separate layers which are located parallel to each other in the form of duct jackets - casings and which constitute an outer channel and an inner channel, i.e. an outer casing known as jacket of the duct having a rectangular cross-section - the outer channel, and an inner casing known also as jacket, running concentrically in the outer jacket - constituting the inner channel. A space filled with polyurethane foam, having a rectangular cross-section is created between the outer jacket and the inner jacket, thus forming an insulating partition - insulating separation, barrier in the meaning as compartment, section or area that divides the layers of the duct. The space created by the inner jacket remains empty, thus forming the inner channel, which constitutes the lumen of the ventilation duct. Thus, the interior formed inside and within the boundaries of the inner jacket is not filled with any insulating material.

Pre-insulated ventilation ducts, i.e. those containing an insulating partition, may be rectangular straight ducts- line ducts - straight pipes, as well as fittings also known as connector having a rectangular cross-section that together with straight ducts form a ventilation network - system e.g. elbows having a rectangular cross-section connecting straight sections, T-pieces - tee, cross-pieces and others used conventionally in the structures of ventilation ducts that build a ventilation network, depending on the layout of ventilation network ducts.

What is important in the invention is that in each type of ventilation duct, be it a straight duct or a connector - fitting, an insulating compartment - partition having a rectangular cross-section and two casings - jackets with specific characteristics, described below and further in the tables, are created.

Each of the inner and outer casing - jackets is ended - terminated with inner and outer termination flanges in the form of a profile having a larger profile than the size of the respective jacket, thus forming letter L between the plane of the jacket - of a given top wall, bottom wall, etc. - and the flange. Preferably, the jacket is in the form of a frame.

Such an end, tip - termination - the flange - is located - applied onto each termination - tip, end of the outer casing - jacket and to each termination -tip, end of the inner casing - inner jacket of the subsequent duct - fitting/straight duct forming the ventilation network. Thereby, such a flange termination allows for proper joining of subsequent ducts that build the ventilation network. The inner and outer termination flanges are otherwise known as a full frame. Thereby, a flange joint is created that allows precise and easy joining of the flanges of the ducts/fittings - connectors that build the ventilation network/system.

The flange can be made in different ways - from a single profile that directly forms the so-called full/complete frame around the jacket as a one profile, or from several profiles, as described in more detail and shown in examples - e.g. in this case, the frame and the corner are shown separately, together forming the full frame, complete around the jacket. In this case profiles, frames in the plural are used.

Preferably, the termination flange, otherwise known as flange, the full frame, is constructed from four sections, parts - steel profiles with dimensions corresponding to the cross-section of the inner or outer duct (the lengths of the sides which together form the flange frames) and four corners. In this case - four profiles - one profile corresponds to the dimension of one side of the jacket - casing. The profile is understood to be profiled/bent into a suitable "L" shape along the length of one side between a portion of the frame - the profile and the side. The profiles and the corners are the components of the entire = complete, whole, full frame of the flange joint around the jacket, the frame being inseparable from the inner or outer jacket. The corners in a variant of the invention join the individual sections of the longitudinal profiles that build the flange frames and the corners of these fittings are inserted into a corresponding hole in the longitudinal profile, together forming the full frame that serves to join the duct jackets between the ducts that build the ventilation network - each jacket has its own full frame - the flange. The full frame - the flange of the inner jacket serves to join another fitting/straight duct to the inner jacket frame and is not bolted in any way - it is applied, and the flange - the full frame of the outer jacket serves to join another fitting/straight duct to the outer jacket frame and is additionally joined, e.g. bolted, to the outer jacket frame of another fitting, preferably with steel bolts, screw e.g. four bolts, screw, and nuts, eg. hex nuts.

Preferably, between the full frames - the flanges of the components to be joined to form the ventilation network (straight ducts/fittings), only on one of these components (on one straight duct/fitting to be joined together), a gasket is placed e.g. two tapes - a seal made of self-adhesive polyethylene foam tape - are placed - applied to both the flange/inner frame and the flange/outer frame of one of the ventilation network components, and the space created between the gasket, e.g. tapes (between the frames to be joined), is filled with polyurethane foam, creating an additional insulating partition, compartment other than mentioned before known as an outer insulation. It is said above that between the flanges - the full frames - if the flange is made of a single profile - or single frames - i.e. if the flange is made of straight profiles - frames and corners of fittings/straight ducts to be joined, only on one of them - on one ventilation duct, a seal in the form of a self-adhesive tape of polyethylene foam is placed on both the inner flange/inner frames and the outer flange/outer frame/frames.

Preferably, the joint area -location - of the outer casing - jacket frames of the network components to be joined, in a duct with a side dimension larger than 200 mm, is reinforced - harden by means of clamp brackets - crimp-on-connector in the meaning of clamp mounted - fitted on the outer jacket frames of the ventilation line components to be joined.

It is important that according to the invention the polyurethane foam insulation - the insulating partition having a rectangular cross-section has a thickness of 10 to 100 mm including the limit value - 10 and 100 - then, the expected results are obtained, preferably from 25 to 100 mm. This value is irrespective of the type of straight duct or fitting.

Dimensions of the duct were also determined: dimensions of the sides of the outer jacket: A and B; C, D - as a designation of a side in case of fittings where the dimensions of the sides are variable by more than two dimensions depending on the function of the duct - its dimensions in the cross-section through the ventilation duct, measured from the outer jacket layers, including the insulating layer, are from 100 to 2000 mm, including the given limit values, and the dimensions of the sides of the inner jacket_ a and b; c, d - as a designation of a side in the case of fittings where the dimensions are variable by more than two dimensions depending on the function of the duct, measured from its inner layer to its opposite inner layer, are from 100 to 2000 mm, including the given limit values. However, the size - the length of the side of the inner jacket is always smaller enough to achieve an insulating partition thickness within the specified range. One side of the outer jacket is designated as: A, and the other as B, C, D, and for the inner jacket it is analogous but with lowercase a and b; c, d. As for the selection of lengths of the sides - which one is longer/which one is shorter is determined by the lengths of the sides given above, but the thickness of the insulation - the insulating partition remains within these ranges. The designation C, D, c, d is found in certain rectangular fittings and then indicates the dimension of the next side of the fitting - each side is so shown in the drawing. This type of fitting that has, in addition to the rectangular components, a circular branch or two different circular branches, is additionally designated with diameters Fi - dimension from the perspective of the outer jacket - and fi - dimension from the perspective of the inner jacket - as shown in the drawing, and is constructed analogously to the above. The circular branch is used to join ventilation lines having a rectangular cross-section to a line having a circular cross-section.

It has also been specified that the thickness of the material of which the outer and inner jackets of the straight duct and the fittings (outer channel and inner channel) are made, i.e. the thickness of these jackets ranges from 0.4 mm to 1.2 mm, is preferably 0.5 mm, while for the fittings the thickness is preferably 0.5 mm.

It is important that the outer and inner jackets according to the invention be made of steel sheet, preferably galvanised steel sheet (painted or not) or acid-resistant steel sheet, or stainless steel sheet. Preferably, the sheet thickness is at most 1.2 mm. The termination flange - the frame - is made similarly.

Galvanised steel sheet is understood to be a galvanised sheet produced by subjecting the steel to a galvanising process, i.e. the steel is coated with a layer of zinc, which forms a very tight coating covering the entire surface.

Preferably, the inner jacket and the outer jacket are made of galvanised steel sheet, e.g. DX51D, which is the type of galvanised metal sheet with a zinc coating, e.g. Z275, which is the thickness of galvanised metal sheet. Galvanised metal sheets are produced by subjecting the steel to a galvanising process. The steel is coated with a layer of zinc by a known method. It is a very tight coating, covering the entire surface. Steel sheets that have been galvanised additionally acquire anti-corrosive properties, moisture resistance, high temperature resistance.

Preferably, the length L of a straight ventilation duct having a rectangular cross-section is L <=1500 mm, preferably 50 ÷ 1500 mm.

Preferably the length L of fittings, i.e:
a symmetric T-piece having a rectangular cross-section, a rectangular T-piece having a circular branch, a cross-piece having a rectangular cross-section is L = 300÷1500 mm, preferably L = 300÷1500;
symmetric and asymmetric reducers, an offset having a rectangular cross-section, for joining ducts, forming a ventilation network of ducts, is 100 ÷ 1500 mm, while that of a T-piece, a cross-piece having a rectangular cross-section is 300 ÷ 1500 mm, preferably L = 300 ÷ 1500.

These values are determined/developed on the basis of analyses and performance testing.

It turned out that these ranges additionally meet the dimensional tolerances according to EN 1505:2001 in this particular invention and guarantee the expected operational properties.

The dimensional limit values are shown below in overviews in examples for individual ventilation ducts, including straight ducts and fittings for joining ducts and constructing a ventilation network and these are size limit values that have been additionally tested for effects, i.e. such values produce the additional beneficial effects described in the example according to the invention and have been granted the National Technical Assessment. These values represent a preferable characteristic according to the invention.

Therefore, preferably, the straight duct having a rectangular cross-section has the dimensions of its inner jacket of 100 ÷ 2000 mm x 100 ÷ 2000 mm, and the length L of the duct is ≤ 1500 mm. It turned out that these ranges in this particular invention additionally meet the dimensional tolerances according to EN 1505:2001. Including the specified limit values. The semicolon denotes a range.

Preferably, the symmetric and asymmetric elbow having a rectangular cross-section has the dimensions of its inner jacket of 100 ÷ 2000 mm, which ensures that the dimensional tolerance according to EN 1505:2001 is additionally met in this particular invention. Including the specified limit values.

Preferably, the symmetric and asymmetric T-piece having a rectangular cross-section has the dimensions of the inner jacket of the duct of 100÷2000 mm, whereas the dimension L is 300÷1500 mm. It turned out that these ranges additionally meet the dimensional tolerances according to EN 1505:2001 in this particular invention and guarantee the expected operational properties. Including the specified limit values.

Preferably the rectangular T-piece having a circular branch has the dimensions of the inner jacket of the rectangular duct of 100÷2000 mm, and the diameter of the inner jacket of the circular branch of the T-piece is in the range of 100÷480 mm, and the dimension L of the whole T-piece is 220÷600 mm. It turned out that these ranges additionally meet the dimensional tolerances according to EN 1505:2001 in this particular invention and guarantee the expected operational properties.

The symmetric and asymmetric reducers and the offset having a rectangular cross-section has the dimensions of the inner jacket of the duct of 100÷2000 mm, whereas the length dimension L is 100÷1500 mm. It turned out that these ranges in this particular invention additionally meet the dimensional tolerances according to EN 1505:2001. Including the specified limit values.

The circular-rectangular symmetric and asymmetric reducers having a rectangular cross-section preferably has the following dimensions of the inner jacket of the duct: 100 ÷ 1000 mm, and the diameter of the inner jacket of the circular branch of the reducer is in the range of 100 ÷ 480 mm, and the length dimension L is 200 ÷ 1000 mm. It turned out that these ranges in this particular invention additionally meet the dimensional tolerances according to EN 1505:2001. Including the specified limit values.

The cross-piece of the duct having a rectangular cross-section, in turn, has preferably the dimensions of the inner jacket of the duct of 100 ÷ 2000 mm. It turned out that these ranges in this particular invention additionally meet the dimensional tolerances according to EN 1505:2001. Including the specified limit values.

The invention is described in more detail in the embodiments of the duct/fitting having a rectangular cross-section in a tabular overview of dimensions of individual ducts/fittings, Table 1-3, and in the drawing:
The object of the invention is shown in the drawing and in embodiments. The drawing shows:

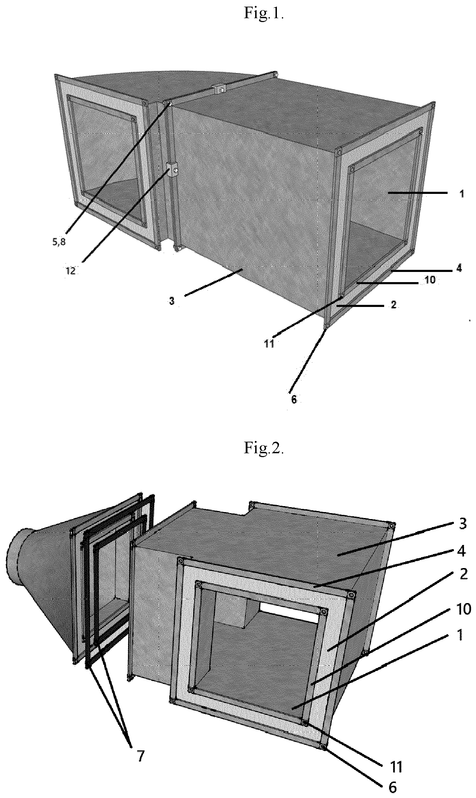

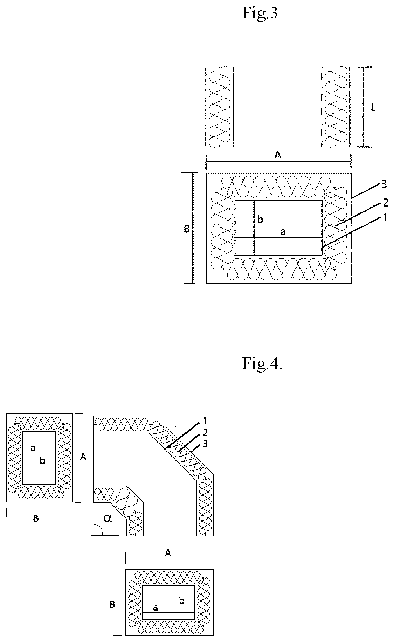

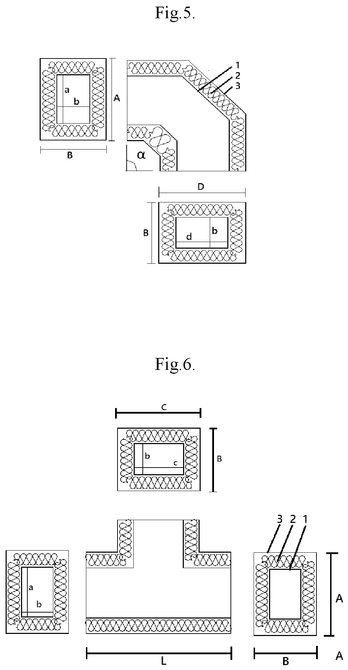

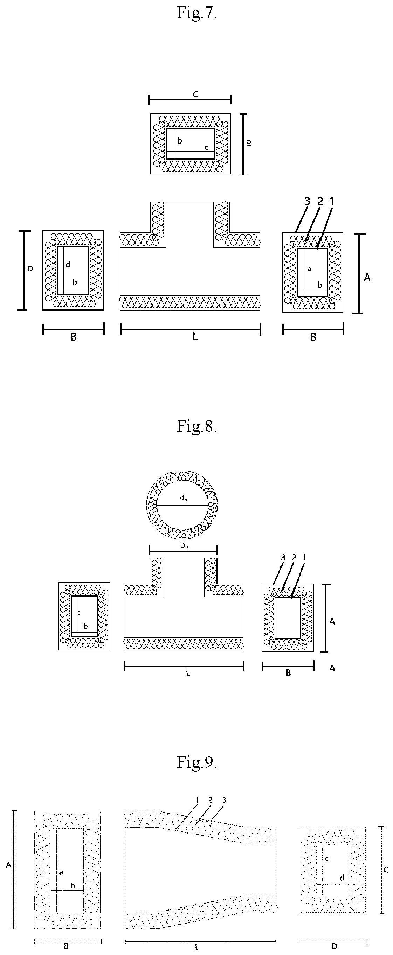

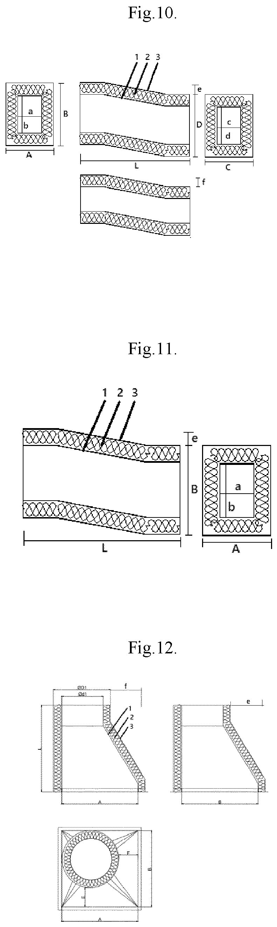

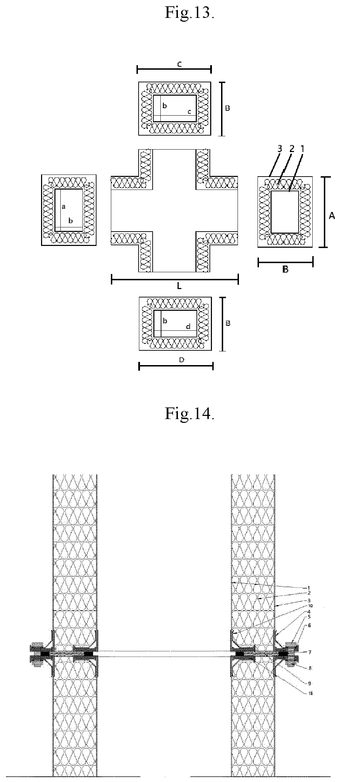

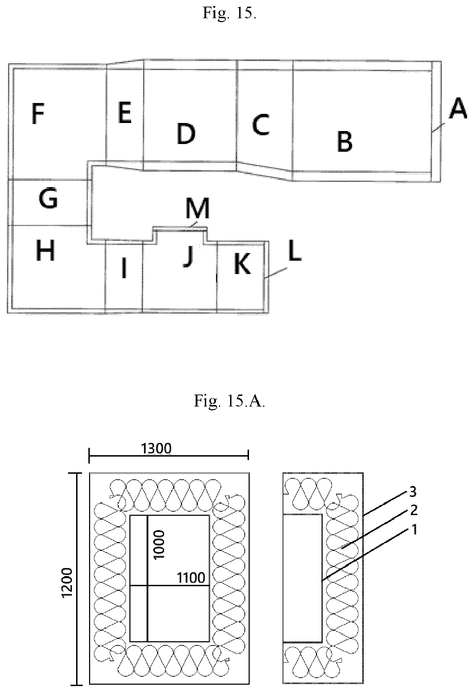

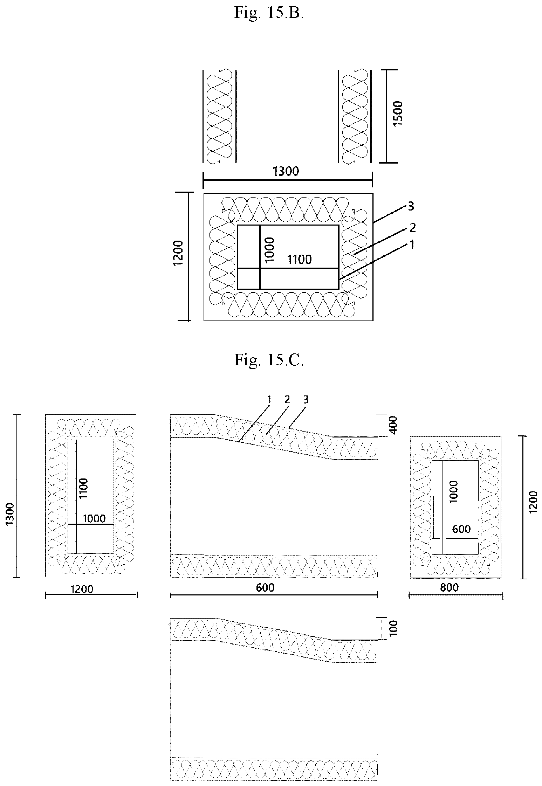

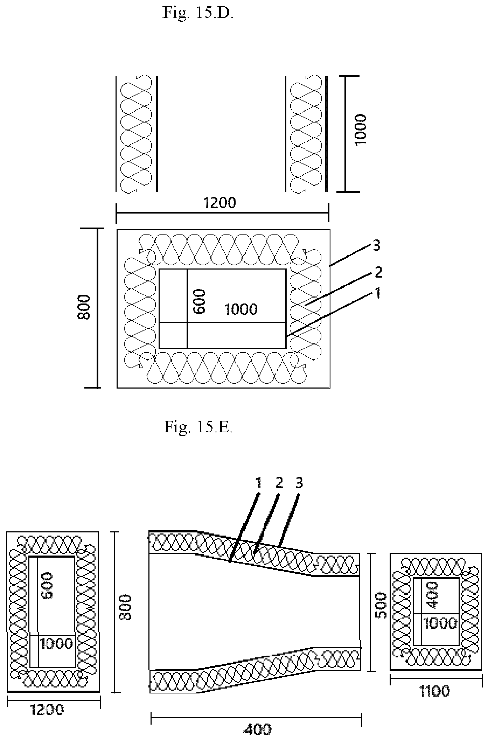

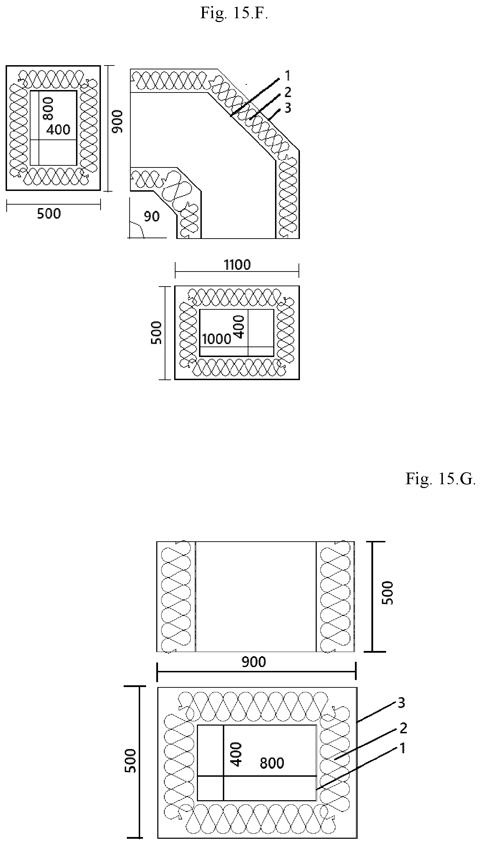

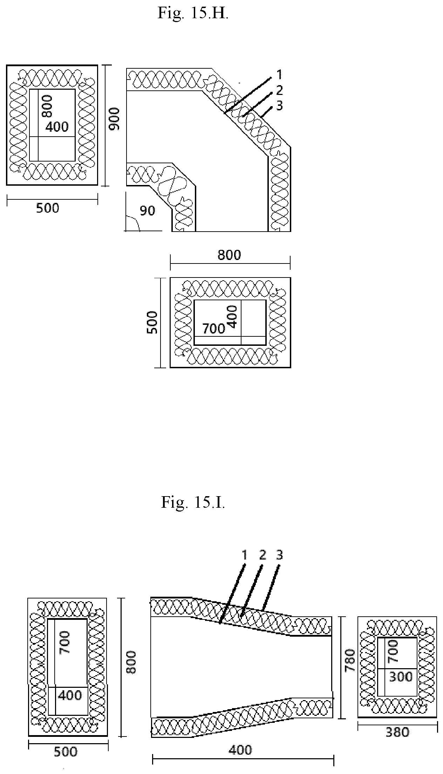

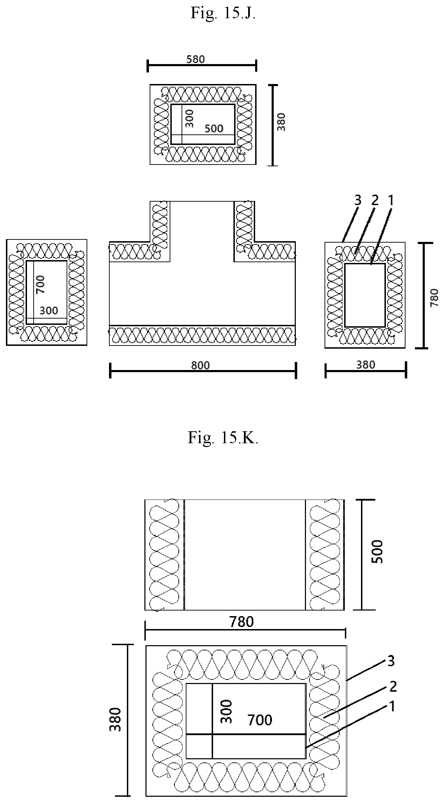

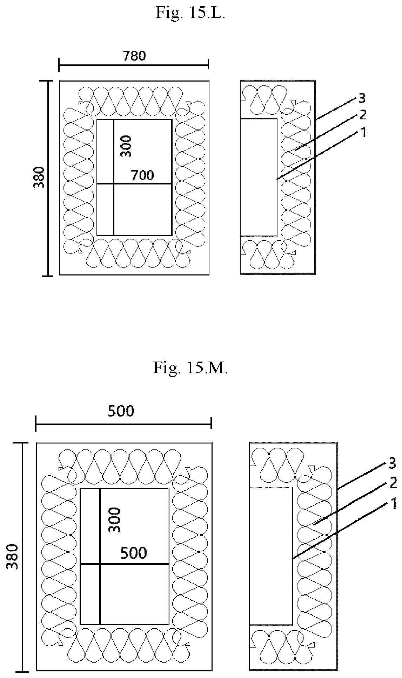

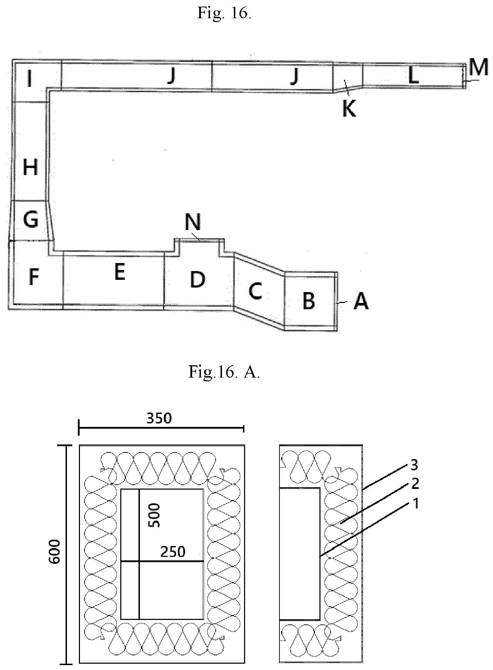

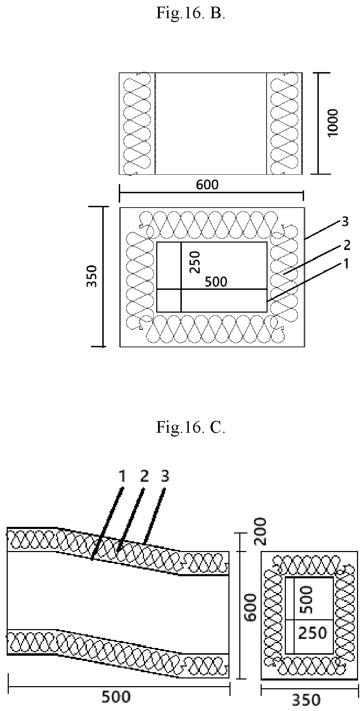

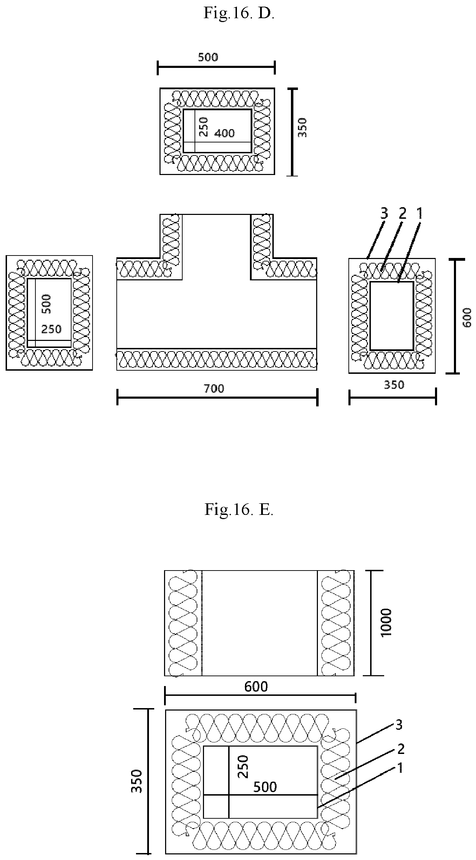

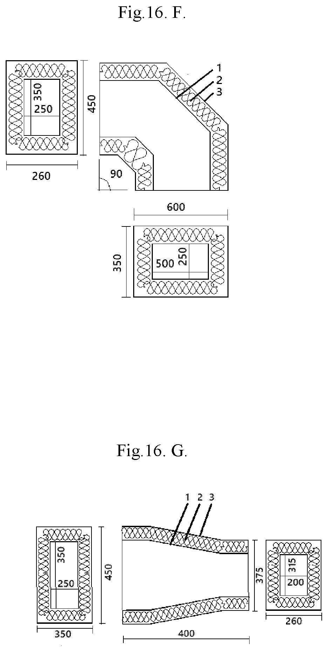

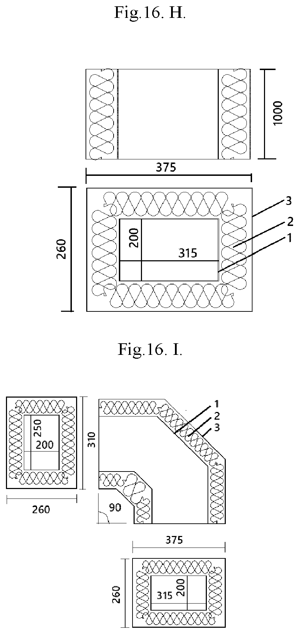

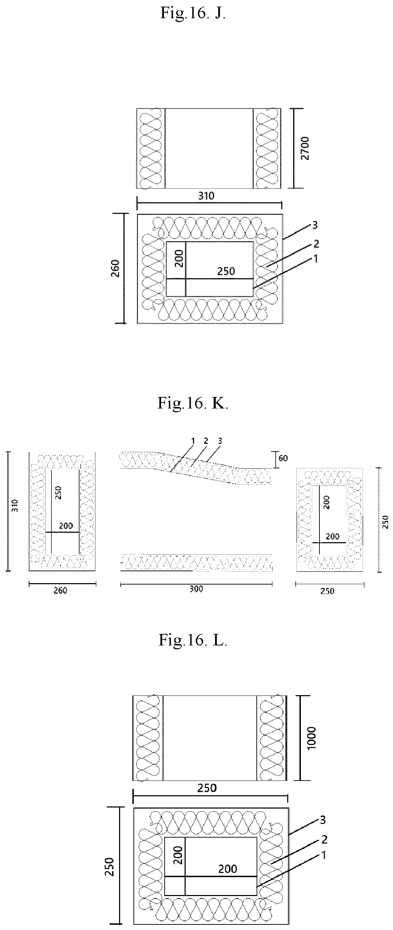

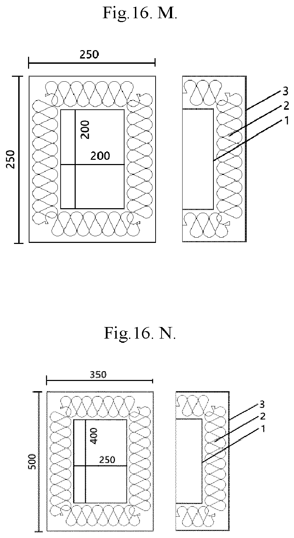

Fig. 1 An axonometric view of an assembled ventilation channel structure with a visible joint to a connector/fitting - an elbow; Fig. 2. An axonometric view of a ventilation channel structure - a T-piece/tee together with a circular-rectangular reducer with its parts taken apart and with visible components to be assembled; Fig. 3. - A straight duct having a rectangular cross-section; Fig. 4. - A symmetric elbow having a rectangular cross-section; Fig. 5. - An asymmetric elbow having a rectangular cross-section; Fig. 6. - A symmetric T-piece having a rectangular cross-section; Fig. 7. - An asymmetric T-piece having a rectangular cross-section; Fig. 8 A rectangular T-piece having a circular branch; Fig. 9. A symmetric reducer; Fig. 10. An asymmetric reducer; Fig. 11. An offset having a rectangular cross-section; Fig. 12. A rectangular asymmetric reducer having a circular branch; Fig. 13. A cross-piece having a rectangular cross-section; Fig. 14. A longitudinal view of two ducts having a rectangular cross-section joined together by frames; Fig. 15. A diagram of the ventilation system, of example 1, made of straight ducts and fittings having a rectangular cross-section, pre-insulated with polyurethane foam, and having dimensions given in Table 1; Fig. 15 A-M - Longitudinal and transverse views of the ducts and fittings specified in Table 1, i.e. in Fig. 15.A. A cover, Fig. 15.B. A channel (straight duct), Fig. 15.C. a reducer etc. according to the table; fig. 16. A diagram of the ventilation system, of example 2, made of straight ducts and fittings having a rectangular cross-section, pre-insulated with polyurethane foam, and having dimensions given in Table 2; Fig. 16.A-N Longitudinal and transverse views of the ducts and fittings specified in Table 2 of Fig. 16, such as Fig. 16. A. A cover etc.

The invention is also presented in tabular lists - sub-tables and tables.

List of designations in the drawing:
A, B i a, b - are the respective sides of the outer/inner jacket.
C, D i c, d - are the respective sides of the outer/inner jacket for certain fittings having variable side lengths.

Therefore, in the case of ducts - fittings having a more complicated construction, i.e. when there are more side lengths, C c and D d are used, in which case C,c represents the remaining sides of the outer/inner jacket, respectively, which differ in dimensions from the sides A,a and B,b. The dimension c, d or C, D is found in specific asymmetric fittings, e.g. asymmetric T-pieces, asymmetric elbows, asymmetric reductions, and is different from the dimension a, b or A, B.

In the case of fittings made of parts having rectangular and circular cross-sections, the diameters of the circular branch are designated by the symbol "Fi" (diameter measured from the edge of the outer jacket to the edge of the opposite outer jacket) or "fi" (diameter measured from the edge of the inner jacket to the edge of the opposite inner jacket). When a fitting is made of several branches having circular cross-sections of different diameters, a designation such as "F1" "F2" and "f1" and "f2" is used.
1 inner casing, jacket
2 insulating partition, area, separation - otherwise known as an insulating compartment, layer of polyurethane foam
3 outer casing, jacket
4 single frame - in the example, an outer jacket profile (4 longitudinal profiles - frames and 4 corners together form a flange of the corresponding jacket), in the embodiment, the flange being a full frame for joining the duct/ fitting jackets is made of several frame components, i.e. longitudinal profiles and corners
5 bolt, screw
6 corner of the outer jacket (4 longitudinal profiles and 4 corners together form a flange of the corresponding jacket), in the embodiment, the flange being a full frame for joining the duct/ fitting jackets is made of several frame components, i.e. longitudinal profiles and corners
7 gasket, seal - in this embodiment , it is a self-adhesive tape of polyethylene foam (PES)
8 nut
9 additional outer insulation of polyurethane foam, known as additional compartment, layer of polyurethane foam between the frames of the ducts/ fittings to be joined into a ventilation network
10 single frame of the inner jacket (4 longitudinal profiles and 4 corners together form a flange of the corresponding jacket), in the embodiment, the flange being a full frame for joining the duct/fitting jackets is made of several frame components, i.e. longitudinal profiles and corners
11 corner of the inner jacket (4 profiles and 4 corners together form a flange of the corresponding jacket), in the embodiment, the flange being a full frame for joining the duct/fitting jackets is made of several frame components, i.e. longitudinal profiles and corners
12 clamp bracket, mounting clamp
   A - dimension of a side of the outer jacket in cross-section
   B - dimension of another side of the outer jacket in cross-section
   a - dimension of a side of the inner jacket in cross-section
   b - dimension of a side of the inner jacket in cross-section
   c - dimension of a side of the inner jacket in cross-section
   C - dimension of another side of the outer jacket in cross-section
   b - dimension of a side of the inner jacket in its asymmetric fitting branch
   D - dimension of a side of the outer jacket in its asymmetric fitting branch

Fittings that have both rectangular and circular branches, but are in a group of rectangles, e.g. a T-piece with a circular branch, have a specific diameter.
fi₁ - diameter dimension of the inner jacket
Fi₁ - diameter dimension of the outer jacket
e - offset dimension from the plane of the side; the offset from the plane of the side is understood to be a displacement/bifurcation in relation to the axis of the duct
f - offset dimension from the plane of the side
L - length of the component (duct or fitting) in longitudinal section
α - angle of the elbow

Designations have been introduced on the figures for explanatory purposes as well.

### Example 1

In the tables, designations from the figures have been introduced.

An overview of limit values of lengths A, a, B, b and L, as well as c, C, d, D, sizes e, E or f, F for the respective types of ventilation ducts having rectangular cross-sections - straight ducts and fittings - is given in tabular overviews of dimensions and in tables. Embodiments show the ducts having the limit parameters indicated in the tabular overviews and tables - minimum value and maximum value.

An insulating partition 2 is made of closed-cell polyurethane foam with a solid structure and has a thickness in the range of 10-100 mm - in this example, ducts with a thickness in the range of 40 to 100 mm were made.

The foam comprises two ingredients: polyol 9758-X - a blend of polyols comprising catalysts, flame retardants and foaming agents; and Isocianato H25C PMDI (polymeric diphenylmethane diisocyanate). The foam used in the example had the following characteristics:
Characteristics of Unit 9758-X
Density after application EN 1602 Kg/m3 - 42
Compressive stress at 10% EN 826 KPa - >160
Dimensional stability 24 hrs. -20ºC / +80ºC % Vol. : <0.5 / <2
Dimensional stability DS (-20,-) 48 h, -20 ºC EN 1604 %Vol / DS(TH) - <1.0 / DS(TH) 4
Dimensional stability DS (70,90) 48 h, 70 ºC, 90 % R.H. EN 1604 %Vol / DS(TH) <1.0 / DS(TH) 4
% of cells closed ISO 4590 % - > 90
Initial thermal conductivity,10ºC EN 12667 W/mº K 0.020
Water absorption (Wp) EN 1609 Kg/m2 <_ 0.2
Reaction to fire EN 13501-1 Classification E

In embodiments, the invention had limit values given in the table. It is important, however, that the value be kept within the specified limits. The thickness of the insulating layer of polyurethane foam - the partition is maintained along the entire length of the straight duct/fitting.

As shown in Fig. 1, a straight ventilation duct having a rectangular cross-section with a length of L=1500 mm consists essentially of an outer jacket 3 of larger diameter and an inner jacket 1 of smaller diameter than the previous one, constituting an outer duct 3, in the centre of which there is an inner duct 1 concentrically located, with a channel formed in the centre. The space between the inner and outer ducts is filled with closed-cell polyurethane foam having in this example a solid and regular structure, forming an insulating partition 2 with a thickness in the range of 10-100 mm, and a method of filling the space between the channels is described below. The jackets 3 and 1 of the duct are made of 0.5 mm thick galvanised steel sheet. Both the inner 1 and outer 3 jackets are provided with a termination, an inner and an outer flange - referred to as a so-called full frame of flange joint, in the example made of several components - profiles (referred to as a frame separately) and corners that together form a flange. Inner jacket frames 10 and outer jacket frames 4, made as steel profiles, as well as steel corners.The outer jacket frame of one fitting is joined to the outer jacket frame of another fitting into a ventilation line by means of steel bolts 5 and nuts 8, as shown in Fig. 14.

The flanges of the inner jackets of individual fittings are not bolted together - full frames (which means a flange made of a single profile) - in this case - reference is made to frames in the plural in the sense of single frames forming, together with a corner, the full frame - the flange. -

Between the flanges - the full frames - if the flange is made of a single profile, or single frames 4,10, as in this embodiment, i.e. if the flange is made of straight profiles - frames and corners of fittings/straight ducts to be joined, only on one of them - on one ventilation duct, a seal 7 in the form of a self-adhesive tape of polyethylene foam PES - physically cross-linked, closed-cell polyethylene foam as described above - is placed on both the inner flange/inner frames/inner frame 10 and the outer flange/outer frame/outer frame 4 of one type of duct. It is adhered to both the inner frame 10 and the outer frame 4 of one of the fittings, as shown in Fig. 1, and the space formed between the gaskets (between the frames to be joined) is filled with polyurethane foam - in this example, closed-cell polyurethane foam with a solid and regular structure of PUR type, forming an additional insulating partition 9 with a thickness in the range of 10 -100 mm, as shown in Fig. 14.

Additionally, the joint area of the outer jacket frames, in a duct with a side dimension larger than 200 mm, is reinforced by means of clamp brackets 12 fitted on the outer jacket frames 4 of the ventilation line components to be joined, as shown in Fig. 1.

### Method of constructing a ventilation network

Figure 14 shows how individual fittings of the ventilation line and/or ducts are joined together, more specifically how the outer frames are bolted together, showing that only the outer frames are bolted together when the flange is made of several profiles - parts - of several single frames and corners..

As shown in Fig. 1,2 and 14, foam pre-insulated straight ducts, elbows, T-pieces, cross-pieces and other ventilation fittings are joined together using flange joint frames, so-called inner jacket frame 10 and outer jacket frame 4, serving to join the individual components of the ventilation network. The outer jacket frame of one fitting is joined to the outer jacket frame of another fitting into a ventilation line by means of steel bolts 5 and nuts 8, thus forming a ventilation network. An example of a ventilation network is shown in Fig. 15 and in Fig. 16 and described in the following examples.

A method of filling the space between the outer jacket and the inner jacket with polyurethane foam, i.e. forming an insulating barrier.

Liquid polyurethane foam is inserted between two ducts positioned in a mould using the "flooding" method, and after a short while a complete insulating layer is obtained. In this example, closed-cell polyurethane foam with a solid and regular structure of PUR type is used as described above - ...........

### Tabular overviews of dimensions:

| | | |
|---|---|---|
| Dimensional range of outer jacket sides | Dimensional range of inner jacket sides | Duct length L, mm |
| A, B, mm (one value over entire length), mm | a, b, mm (one value over entire length), mm | |
| 100 ÷ 2000 | 50 ÷ 1950 | 50 ÷ 2500 mm |
| | Dimensional tolerances according to PN-EN 1505:2001 | |
| "÷" in the given range in the tables means that a given side can, according to the invention, have any dimension from this range including the limit values, e.g. 100 ÷ 2000 100,102, 550..... up to and including 2000. | | |

The above overview refers to a duct of type: channel - straight duct having a rectangular cross-section - Fig. 3

| | | |
|---|---|---|
| Dimensional range of outer jacket sides | Dimensional range of inner jacket sides | Angle |
| | | α,° |
| A, B, D, mm (one value over entire length), mm | a, b, d, mm (one value over entire length), mm | |
| 100 ÷ 2000 | 50 ÷ 1950 | 0÷135 |
| | Dimensional tolerances according to PN-EN 1505:2001 | |

The above overview refers to a duct of type: symmetric and asymmetric elbow having a rectangular cross-section - Fig. 4 and Fig. 5

| | | |
|---|---|---|
| Dimensional range of outer jacket sides | Dimensional range of inner jacket sides | Duct length L, mm |
| A, B, C, mm | a ,b, c, mm | |
| 100 ÷ 2000 | 50 ÷ 1950 | 350÷2200 |
| Dimensional tolerances according to PN-EN 1505:2001 | | |

The above overview refers to a duct of type: symmetric T-piece having a rectangular cross-section - Fig. 6

| | | |
|---|---|---|
| Dimensional range of outer jacket sides | Dimensional range of inner jacket sides | Duct length L, mm |
| A, B, C, D, mm | a, b, c, d, mm | |
| 100 ÷ 2000 | 50 ÷ 1950 | 350÷2200 |
| | Dimensional tolerances according to PN-EN 1505:2001 | |

The above overview refers to a duct of type: asymmetric T-piece having a rectangular cross-section - Fig. 7

| | | | | |
|---|---|---|---|---|
| Dimensional range of outer jacket sides | Dimensional range of inner jacket sides | Dimensional range of diameter of a circular branch, its outer jacket Fi1 | Dimensional range of diameter of a circular branch, its inner jacket fi1 | Duct length L, mm |
| | a, b, mm | | | |
| A, B, mm | | | | |
| 100 ÷ 2000 | 50 ÷ 1950 | 120-500 | 100-480 | 350÷2200 |
| | Dimensional tolerances according to PN-EN 1505:2001 | | | |

The above overview refers to a duct of type: T-piece having a rectangular cross-section with a circular branch - Fig. 8

| | | |
|---|---|---|
| Dimensional range of outer jacket sides | Dimensional range of inner jacket sides | Duct length L, mm |
| A, B, C, D, mm | a, b, c, d, mm | |
| 100 ÷ 2000 | 50 ÷ 1950 | 350÷1500 |
| | Dimensional tolerances according to PN-EN 1505:2001 | |

The above overview refers to a duct of type: diffuser - symmetric reducer - Fig. 9

| | | | |
|---|---|---|---|
| Dimensional range of outer jacket sides | Dimensional range of inner jacket sides | Duct length L, mm | Offset from plane |
| | | | e, f, mm |
| A, B, C, D, mm | a, b, c, d, mm | | |
| 100 ÷ 2000 | 50 ÷ 1950 | 350÷1500 | 0÷1500 |
| | Dimensional tolerances according to PN-EN 1505:2001 | | |

The above overview refers to a duct of type: diffuser - asymmetric reducer - Fig. 10

| | | | |
|---|---|---|---|
| Dimensional range of outer jacket sides | Dimensional range of inner jacket sides | Duct length L, mm | Offset from plane |
| | | | e, mm |
| A, B, mm | a, b, mm | | |
| 100 ÷ 2000 | 50 ÷ 1950 | 350÷1500 | 0÷1500 |
| | Dimensional tolerances according to PN-EN 1505:2001 | | |

The above overview refers to a duct of type: offset - Fig. 11

| | | | |
|---|---|---|---|
| Dimensional range of outer jacket sides | Dimensional range of inner jacket sides | Duct length L, mm | Offset from plane |
| | | | e, f mm |
| A, B, Fi₁, mm | a, b, fi₁, mm | | |
| 100 ÷ 2000 | 50 ÷ 1950 | 350÷1500 | 0÷1500 |
| | Dimensional tolerances according to PN-EN 1505:2001 | | |

The above overview refers to a duct of type: asymmetric rectangular reducer with a circular offset - Fig. 12

| | | |
|---|---|---|
| Dimensional range of outer jacket sides | Dimensional range of inner jacket sides | Duct length L, mm |
| A, B, C, D, mm | a, b, c, d, mm | |
| 100 ÷ 2000 | 50 ÷ 1950 | 350÷2200 |
| | Dimensional tolerances according to PN-EN 1505:2001 | |

The above overview refers to a duct of type: cross-piece having a rectangular cross-section - Fig. 13

### Table 1- Fig. 15

### List of rectangular insulated components 40-100 mm

**Table 1**

| Fig. 15 letter | Inner jacket - dimensions in millimetres | Outer jacket - dimensions in millimetres | Thickness of the insulating layer of polyurethane foam |
|---|---|---|---|
| A | Cover 1100 x 1000 (i.e. Fig 15A shows the cover) | | |
| B | Channel 1100 x 1000, L-1500 | Channel 1300 x 1200, L-1500 | 100 mm |
| C | Reducer 1100 x 1000 / 1000 x 600, L-600 | Reducer 1300 x 1200 / 1200 x 800, L-600 | 100 mm |
| D | Channel 1000 x 600, L-1000 | Channel 1200 x 800, L-1000 | 100 mm |
| E | Reducer 600 x 1000 / 400 x 1000, L-400 | Reducer 800 x 1200 / 500 x 1100, L-400 | 100 to 50 mm |
| F | Elbow 1000 x 400 / 800 x 400, r-200 | Elbow 1100 x 500 / 900 x 500, r-200 | 50 mm |
| G | Channel 800 x 400, L-500 | Channel 900 x 500, L-500 | 50 mm |
| H | Elbow 800 x 400 / 700 x 400, r-200 | Elbow 900 x 500 / 800 x 500, r-200 | 50 mm |
| I | Reducer 400 x 700 / 300 x 700, L-400 | Reducer 500 x 800 / 380 x 780, L-400 | 50 to 40 mm |
| J | T-piece 2 x 700 x 300 / 500 x 300, L-800, L1-150 | T-piece 2 x 780 x 380 / 580 x 380, L-800, L1- 110 | 40 mm |
| K | Channel 700 x 300, L-500 | Channel 780 x 380, L-500 | 40 mm |
| L | Cover 700 x 300 | | |
| M | Cover 500 x 300 | | |

The example is a ventilation line of pre-insulated ducts and fittings having a rectangular cross-section made of galvanised steel sheet DX51D Z275, 0.5 mm thick, for straight ducts and fittings made by means of lap seams and welds. The pre-insulated straight duct consists of an inner jacket 1, an insulating partition 2 - an insulating layer of closed-cell polyurethane foam, and an outer jacket 3 with a correspondingly larger diameter, given in Table 1. The pre-insulated fitting consists of an inner jacket 1, an insulating partition 2 - an insulating layer of closed-cell polyurethane foam and an outer jacket 3 with a correspondingly larger diameter, i.e. increased by the size of the insulating layer 2 of polyurethane foam, given in Table 1. Individual components of the system are joined together by inner 10 and outer 4 frames of flange joint. The outer jacket frames of the individual fittings are bolted together using steel bolts 5 and nuts 8. Between the frames of the components to be joined, only on one of these components, a seal made of self-adhesive polyethylene (PES) foam tape 7 is placed and applied to both the inner frame 10 and the outer frame 4 of one of the components, and the space created between these gaskets (between the frames to be joined) is filled with polyurethane foam, creating an additional outer insulation 9.

Additionally, the joint area of the outer jacket frames 4, in a duct with a side dimension larger than 200 mm, is reinforced by means of clamp brackets 12 fitted on the outer jacket frames 4 of the ventilation line components to be joined.

Thickness of the insulating barrier 2 of polyurethane foam in Example 1 is in the range of: 40 to 100 mm. Individual components of the ventilation line of Example 1, together with the thickness of the outer insulation of polyurethane foam, are shown in the drawings (Fig. 15.A-M) below and in Table 1.

### Method of constructing a ventilation network

As shown in Fig. 2, foam pre-insulated straight ducts, elbows, T-pieces, cross-pieces and other ventilation fittings are joined together using flange joint frames, so-called inner jacket frame 10 and outer jacket frame 4, serving to join the individual components of the ventilation network. The outer jacket frames of the individual fittings are bolted together using steel bolts 5 and nuts 8, thus forming the ventilation network.

A method of filling the space between the outer jacket and the inner jacket with polyurethane foam, i.e. forming an insulating barrier.

Liquid polyurethane foam is inserted between two ducts positioned in a mould using the "flooding" method, and after a short while a complete insulating layer is obtained.

### Example 2

The duct/fitting is constructed similarly to the example described above. Fig. 16. shows a diagram of a ventilation system, constructed of straight ducts and fittings having a rectangular cross-section, pre-insulated with polyurethane foam, and having dimensions given in Table 2.

**Table 2 - Fig. 16**

| List of rectangular insulated components 25-50 mm | | | |
|---|---|---|---|
| Fig. 16 letter | Inner jacket - dimensions in millimetres | Outer jacket - dimensions in millimetres | Thickness of the insulating layer of polyurethane foam |
| A | Cover 500 x 250 (i.e. Fig 16 A shows the cover) | | |
| B | Channel 500 x 250, L-500 | Channel 600 x 350, L-500 | 50 mm |
| C | Offset 500 x 250, e-200, L-500 | Offset 600 x 350, e-200, L-500 | 50 mm |
| D | T-piece, tee 2x 500 x 250 / 400 x 250, L-700, L1-150 | T-piece 2x 600 x 350 / 500 x 350, L-700, L1-100 | 50 mm |
| E | Channel 500 x 250, L-1000 | Channel 600 x 350, L-1000 | 50 mm |
| F | Elbow 500 x 250 / 350 x 250, r-150 | Elbow 600 x 350 / 450 x 350, r-100 | 50 mm |
| G | Diffuser 350 x 250 / 315 x 200, L-400 | Diffuser 450 x 350 / 375 x 260, L-400 | 50 to 30 mm |
| H | Channel 315 x 200, L-1000 | Channel 375 x 260, L-1000 | 30 mm |
| I | Elbow 315 x 200 / 250 x 200, r-150 | Elbow 375 x 260 / 310 x 260, r-120 | 30 mm |
| J | Channel 250 x 200, L-2700 | Channel 310 x 260, L-2700 | 30 mm |
| K | Diffuser 250 x 200 / 200 x 200, L-300 | Diffuser 310 x 260 / 250 x 250, L-300 | 30 to 25 mm |
| L | Channel 200 x 200, L-1000 | Channel 250 x 250, L-1000 | 25 mm |
| M | Cover 200 x 200 | | |
| N | Cover 400 x 250 | | |

### Structure of a ventilation duct

The example is a ventilation line of pre-insulated ducts and fittings having a rectangular cross-section made of galvanised steel sheet DX51D Z275, 0.5 mm thick, for straight ducts and fittings made by means of lap seams and welds. The pre-insulated straight duct consists of an inner jacket 1, an insulating partition 2 - an insulating layer of closed-cell polyurethane foam, and an outer jacket 3 with a correspondingly larger diameter, given in Table 1. The pre-insulated fitting consists of an inner jacket 1, an insulating partition 2 - an insulating layer of closed-cell polyurethane foam and an outer jacket 3 with a correspondingly larger diameter, i.e. increased by the size of the insulating layer 2 of polyurethane foam, given in Table 1. Individual components of the system are joined together by inner 10 and outer 4 frames of flange joint. The outer jacket frames of the individual fittings are bolted together using steel bolts 5 and nuts 8. Between the frames of the components to be joined, only on one of these components, a seal made of self-adhesive polyethylene (PES) foam tape 7 is placed and applied to both the inner frame 10 and the outer frame 4 of one of the components, and the space created between these gaskets (between the frames to be joined) is filled with polyurethane foam, creating an additional outer insulation 9.

Additionally, the joint area of the outer jacket frames 4, in a duct with a side dimension larger than 200 mm, is reinforced by means of clamp brackets 12 fitted on the outer jacket frames 4 of the ventilation line components to be joined.

Thickness of the insulating barrier 2 of polyurethane foam in Example 2 is in the range of: 25 to 50 mm. Individual components of the ventilation line of Example 2, together with the thickness of the outer insulation of polyurethane foam, are shown in the drawings (Fig. 16.A-N) below and in Table 2.

### Method of constructing a ventilation network

As shown in Fig. 2, foam pre-insulated straight ducts, elbows, T-pieces, cross-pieces and other ventilation fittings are joined together using flange joint frames, so-called inner jacket frame 10 and outer jacket frame 4, serving to join the individual components of the ventilation network. The outer jacket frames of the individual fittings are bolted together using steel bolts 5 and nuts 8, thus forming the ventilation network.

A method of filling the space between the outer jacket and the inner jacket with polyurethane foam, i.e. forming an insulating barrier.

Liquid polyurethane foam is inserted between two ducts positioned in a mould using the "flooding" method, and after a short while a complete insulating layer is obtained.

The advantage of the invention is that the duct structure and the insulating layer formed allow a thermal transmission coefficient that is twice as good as in the insulation wool usually used in ventilation to be achieved, which has a beneficial effect on the elimination of heat loss in the installation and has a beneficial effect on the weight and size of the installation. Furthermore, it effectively seals and stiffens the channel by improving its resistance to high pressure and the associated deformation, and eliminates the formation of "thermal bridges" found in other insulating materials. The selected thickness of the insulating layer guarantees optimum stiffness and relatively low weight. The structure allows for a duct that is fire-retardant and non-flammable, as well as corrosion-resistant and non-dripping. Not having to carry out assembly using, among other things, assembly pins, the welding of which weakens the surface of the metal sheet, and nails that are welded to the surface of the ventilation channel has a beneficial effect on the protection of the zinc coating.

Unlike other known ducts with an insulating material, the invention guarantees high resistance to water vapour diffusion, which prevents condensation and moisture ingress - the main cause of corrosion on the surface of pipes and channels. The ducts according to the invention can be used outdoors due to the fact that they are extremely tight - in tests, they achieved the highest possible air tightness class D, there is no air leakage, and rainwater cannot penetrate the insulating layer. Such an air tightness class is not achievable with conventional ventilation ducts.

Under the influence of limit values of static pressure according to EN 1507:2007 (-500 to 1000 Pa), there is no permanent deformation or sudden change in leakage.

In addition, the structure and formed insulating layer of the duct effectively suppresses the noise emitted by air movement. This is a highly desirable property on the market.

A significant reduction in the use of metal sheet of up to 50% by allowing the use of thinner metal sheets due to the foam layer present which sufficiently stiffens the duct structure. The solution is environmentally beneficial.

### Example - TESTING OF PROPERTIES

### Performance testing for ventilation ducts

The ducts described in Examples 1 and 2 were subjected to performance testing.

### Description of leakage and strength testing

### Characteristics tested

### Leakage and strength of ventilation ducts

### Testing method

Leakage and strength of the ventilation ducts were tested according to standard PN-EN 1507:2007 - Ventilation for buildings - Ventilation ducts of sheet metal of rectangular cross-section described in the examples above are tested for the requirements for strength and leakage, with regard to maximum limit values of static pressure for the low-pressure execution class.

The tested system of ducts and fittings was subjected to static pressure: -500 (by "sucking" air out of the system) and +1000 Pa (by forcing air into the system)

### Pressure holding time 600 s

### Results:

The test shows that there is no permanent deformation of the tested system components
and no sudden changes in test pressure or air leakage.

### Description of non-fire propagation testing

### Testing method according to PN-EN 13823+A1:2014; PN-EN ISO 11925-2:2020-09

A sample consisting of components that build the duct - 7 pieces of foam pre-insulated straight ducts having a circular cross-section (pipes), not connected to each other, positioned vertically, was subjected to the action of a surface-edge flame for about 15 minutes in a special furnace.

The classification report obtained is valid for end-use applications according to the technical conditions to which the buildings and their location should conform, and as for the product that is "non-flammable, non-dripping and non-falling off under the influence of fire and not spreading fire inside buildings" according to the Regulation of the Minister of Infrastructure of 12 April 2002 (Journal of Laws No. 75 of June 15, 2002, item 690, as amended). At the same time, the product is evaluated as not falling off under the influence of fire.

Description of test 3 - material strength of the insulating layer in the samples of jackets with an insulating partition.

Scope of testing according to EN 1607:2013 Thermal insulating products for building applications - Determination of tensile strength perpendicular to faces

PN-EN 1604:2013 Thermal insulating products for building applications. Determination of dimensional stability under specified temperature and humidity conditions

PN-EN 1602:2013 Thermal insulating products for building applications. Determination of the apparent density

The scope of testing of pre-insulated ventilation ducts having a circular cross-section included:
- determination of the apparent density,
- shear strength in a single-sample system,
- dimensional stability after 24 hours at +100°C.

The results are shown in the table below.

Table 3 shows that the samples tested meet the requirements of the relevant standard.

**Table 3**

| The system is understood to be the 2 ventilation ducts of Examples 1 and 2 individually, consisting of all the fittings / straight ducts listed in these examples. | | | | |
|---|---|---|---|---|
| Pos. | General | Practical properties | Methods of | Explanations |
| *1* | *2* | *3* | *4* | |
| 1 | Duct leakage | Class D | PN-EN 1507:2007 WO-KOT/36/01 issue testing conditions: -500 to 1000 Pa | The tested system is described in Example 1.2 |
| 2 | Duct strength | no permanent deformation and no sudden change in leakage | | The tested system is described in Example 1.2 |
| 3 | Durability (components of galvanised steel sheet): | ≥ 275 | | The testing was carried out on samples that are fragments of ducts constructed from jackets of galvanised steel sheet from which jackets with dimensions of 100x100mm are formed. |
| | mass of the zinc coating, g/m2 | 20 (tolerance according to PN-EN 10346) | | |
| | - thickness of zinc coating, µm | | PN-EN 10346:2015, | |
| | | | PN-EN ISO 2808:2020 | |
| | | | PN-EN 1602:2013 | |
| 4 | Apparent density (PUR foam core), kg/m³ | ≥ 50 | | Testing on samples of 100m and 50mm thick insulating layer - partition made of foam. From the samples provided, test specimens of approximately 80x80x80mm and 80x80x30mm, respectively, were cut out. |
| 5 | Dimensional stability (PUR foam core), after 24 h at +100°C, %, in directions of: | ± 2 | PN-EN 1604:2013 | The testing was carried out on samples that are fragments of ducts constructed from jackets of galvanised steel sheet from which jackets with dimensions of 100x100mm are formed. |
| | | ± 10 | | |
| | - length and width | | | |
| | - thickness | | | |
| 6 | Tensile strength perpendicular to faces (layered samples with a PUR foam core), kPa | ≥ 35 | PN-EN 1607:2013 | Testing on samples of 100m and 50mm thick insulating layer made of closed-cell polyurethane foam From the samples provided, test specimens of approximately 80x80x80mm and 80x80x30mm, respectively, were cut out. |
| 7 | Thermal conductivity coefficient at 10 °C (PUR (polyurethane) foam core), λ_{D}, W/m·K | 0.020 ÷ 0.025 | PN-EN 12667:2002 | |
| 8 | Fire classification in terms of reaction to fire | B-s3,d0 | PN-EN 13501-1:2019 | |

Table 3 shows that the tested ventilation line, its operational properties such as tightness and strength, durability of the coating, fire resistance, tensile strength, density, dimensional stability and thermal conductivity meet the requirements of the building regulations for this group of construction products.

## Claims

1. Ventilation duct having a rectangular cross-section in the form of straight duct or connector duct, especially elbow or tee or cross-piece or reducer that created a ventilation system, the duct comprises insulation layer of polyurethane foam, **characterized in that** in its basic structure it comprises two separate layers which are located parallel to each other in the form of outer casing (3) and inner casings (1) having a rectangular cross-section made of steel sheet, preferably metal sheet with a zinc, wherein between the outer casing and the inner casings space is created that is filled with open cells polyurethane foam or close cells polyurethane foam forming insulating compartment (2) with a thickness of minimum 10 and maximum 100 mm, preferably from 25 to 100 mm, while the dimensions of the sides (A, B, C, D) of the outer casing (3) are from minimum 100 to maximum 2000 mm with a thickness of minimum 10 to maximum 100 mm, preferably from 10 to 50 mm, and additionally each of casings is end with inner flange (10,11) and outer flange (4,6) having a larger profile than the size of the corresponding casing, while flange is located on each end of the outer casing and to each end of the inner casing of the subsequent duct forming the ventilation system.

2. The duct according to claim 1, wherein flange can be made as one profile in the form of a full frame around casing or is made from several profiles.

3. The duct according to claim 2, wherein flange of at least one casing is made in several profiles forming separate longitudinal frames and corners in between forming together the full frame around corner.

4. The duct according to claim 1-3, wherein inner flange (10,11) of the inner casing (1) enables joining in a way of locating of inner flange with subsequent inner flange (10,11) of the inner casing (2) of subsequent duct, while outer flange (4,6) of the outer casing (3) enables joining with subsequent outer flange (4,6) of the subsequent duct by their additional connecting.

5. The duct according to claim 1-4, wherein on inner flange (10,11) and outer flange (4,6), between of the joined ducts forming ventilation system , on one of it a gasket is placing, preferably a tape made of polyethylene foam.

6. The duct according to claim 5, wherein the space created between gasket is filled with polyurethane foam, creating an additional insulating compartment as outer insulation (9).

7. The duct according to claim 1-6, wherein the location of joining of the outer casings of joining components of the in a duct with a side dimension larger than 200 mm, is harden by a clamp mounted on outer casing of joining components.

8. The duct according to claim 1-7, wherein the thickness of the material of which the outer and inner casings are made ranges from 0.4 mm to 1.2 mm, preferably 0.5 mm.

9. The duct according to claim 1-8, wherein the outer and inner casings are made of steel sheet, preferably galvanised steel sheet or acid-resistant steel sheet, or stainless steel sheet.

10. The duct according to claim 1-9, wherein the sheet thickness of which the casings are made is at most 1.2 mm.
